Europäisches Patentamt

European Patent Office

Office européen des brevets

(19)

(11) Publication number: **0 088 640**
A2

(12) # EUROPEAN PATENT APPLICATION

(21) Application number: **83301311.3**

(22) Date of filing: **09.03.83**

(51) Int. Cl.³: **B 63 H 21/32,** B 63 B 1/38

(30) Priority: **09.03.82 JP 35747/82**

(43) Date of publication of application: **14.09.83**
**Bulletin 83/37**

(84) Designated Contracting States: **DE FR GB IT NL SE**

(71) Applicant: **Ikeda, Akira, 22-6 4-chome, Sonan,**
**Sagamihara-shi Kanagawa-ken (JP)**

(72) Inventor: **Ikeda, Akira, 22-6 4-chome, Sonan,**
**Sagamihara-shi Kanagawa-ken (JP)**

(74) Representative: **Sheard, Andrew Gregory et al, Kilburn &**
**Strode 30, John Street, London WC1N 2DD (GB)**

(54) **Vessel with exhaust through bottom.**

(57) A high speed vessel, the main exhaust b of which opens through the bottom, comprises a duct 12 leading forward from the exhaust opening to enable exhaust gases quickly to fill a recess 2 to provide lift and lower water resistance. The recess 2 is divided into a shallow portion ($2_1$) and a deep portion ($2_2$). A groove 14 is provided around the periphery of the vessel's bottom to trap exhaust gases. A triangular water flow guide 20 of trapezium-like vertical section is positioned forward of a propeller to divert the flow of aerated water which would otherwise lead to a reduction in the propeller's efficiency.

ACTORUM AG

EP 0 088 640 A2

1.

"VESSEL WITH EXHAUST THROUGH BOTTOM"

This invention relates to a vessel, particularly a high speed boat, in which exhaust gas discharges through the vessel's bottom.

In the past, vessels have discharged exhaust gas into the atmosphere, and have consequently been required to install silencers, which are disadvantageous in that they reduce the power output and increase the weight of the vessel. A vessel discharging exhaust gas through the ship's bottom was then developed, by the inventor of the present invention, and such a vessel will be described later.

When this arrangement was applied to a vessel of a displacement of 40 tonnes class, the static pressure at the exhaust port of the vessel's bottom becomes lower than atmospheric pressure when the ship moves at a speed of 4 to 5 knots (2 to 2.5 m/s) or more, thus increasing the drawn on exhaust gases from the engine and increasing the efficiency of the engine, thereby reducing fuel consumption.

The inventor then developed an improvement on the above arrangement which allows a reduction in the frictional resistance of the vessel's bottom and lift to be increased. This improvement involved the provision of a central recess in the vessel's bottom, as will be described more fully later.

According to a first aspect of the present invention, there is provided a vessel whose bottom comprises a recess having an opening through

2.

which exhaust gases can pass characterised in that there is provided a duct in the recess leading forward from the opening.

The duct preferably does not protrude beyond the recess so that drag is not adversely affected. The duct may lie along a keel line of the vessel and is preferably of part-circular, for example semi-circular, section. An end of the duct remote from the opening may open adjacent a step delimiting the recess.

According to a second aspect of the present invention, there is provided a vessel whose bottom comprises a recess having an opening through which exhaust gases can pass characterised in that the recess comprises a relatively deeply recessed portion and a relatively shallowly recessed portion and in that the opening is situated in the relatively deeply recessed portion, which is astern of the relatively shallowly recessed portion.

A step may delimit the relatively deeply recessed portion from the relatively shallowly recessed portion and the step may run across the vessel, for example perpendicular to a keel line.

According to a third aspect of the present invention, there is provided a vessel whose bottom comprises a recess having an opening through which exhaust gases can pass characterised in that a channel is provided around at least part of the recess.

The channel is preferably at least in part provided by a groove in the vessel's bottom, which groove may be adjacent the chine. The channel preferably also extends across the vessel at the stern and traps or at least helps trap exhaust gases. The channel may be formed at the stern and/ or at the vessel's sides by a flap.

According to a fourth aspect of the present invention, there is provided a vessel whose bottom comprises a recess having an opening through which exhaust gases can pass, the vessel having a screw propeller, characterised in that a water flow guide is positioned in the recess and at least partially forward of the propeller.

The water flow guide serves to divert highly aerated or foaming water from the propeller and may by its shape serve to de-aerate, at least partially, water flowing past it.

The water flow guide may have a dove-tail or trapezium-like vertical section, with the shorter of the two parallel sides of the trapezium being adjacent the vessel's bottom. The water flow guide is preferably positioned within the recess, for example within a relatively deeply recessed portion, and desirably does not protrude from the recess.

In plan view from the bottom, the water flow guide may be triangular, although the sides need not be straight. It is particularly preferred that the water flow guide possesses a plane of symmetry in which the axis of rotation of the propeller lies. In one embodiment the water flow guide is in the shape of an isosceles triangle in plan, and it may be in the shape of an equilateral triangle.

The invention also extends to a vessel in accordance with any two or more aspects of the invention.

For a better understanding of the present invention and to show how it may be put into effect, reference will now be made, by way of example, to the accompanying drawings, in which:-

Figure 1 shows a partial sectional schematic view, taken along the line 1-1 of Figure 2, of a prior vessel in which exhaust gases discharge through the vessel's bottom;

Figure 2 shows a further partial schematic view of the vessel shown in Figure 1;

Figure 3 shows a side elevational schematic view of another prior vessel in which exhaust gases discharge through the vessel's bottom;

Figure 4 shows a partial schematic bottom plan view of the vessel shown in Figure 3;

Figure 5 shows a side elevational schematic view of an embodiment of the present invention;

Figure 6 shows a schematic bottom plan view of the vessel shown in Figure 5;

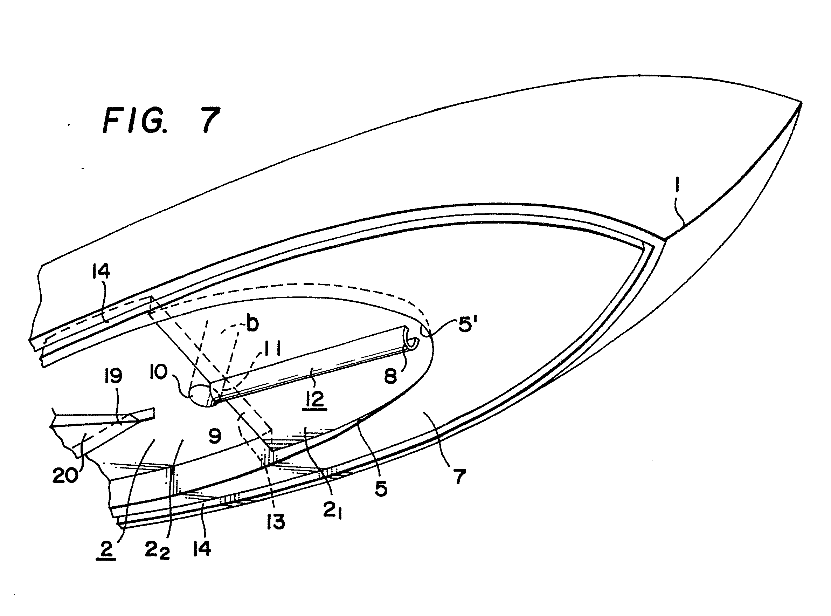

Figure 7 shows a partial schematic perspective view of the vessel shown in Figure 5;

Figure 8 shows a partial end elevational schematic view of a detail of the vessel shown in Figure 5;

5.

Figure 9 shows a partial sectional schematic view taken along the line IX-IX of Figure 6;

Figure 10(a) shows a partial sectional schematic view of a modification of a detail of the vessel shown in Figure 5;

Figure 10(b) shows a partial side elevational schematic view of a detail of the vessel shown in Figure 5; and

Figure 11 shows a graph of the relationship between effective power and speed for a prior vessel and for a vessel according to the present invention.

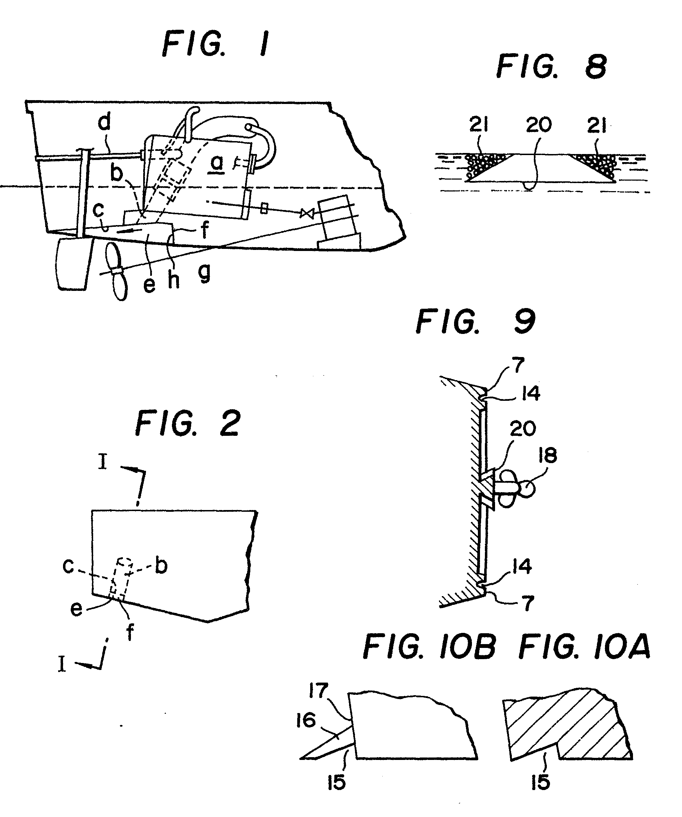

Referring now to the drawings, Figures 1 and 2 show a prior vessel, in which the main exhaust pipe b of the engine a opens to the water through the vessel's bottom c near to the stern. An auxiliary exhaust pipe d branches from the main exhaust pipe b and is open to the atmosphere for the discharge of exhaust gases when the vessel is stationary or moving slowly or going astern. A groove e runs forward from the vessel's stern, and a wall f terminates the groove e at its deepest part. A step h is thereby formed by the wall f in the main portion of the vessel's body g, and the main exhaust pipe b opens through the vessel's bottom c into the groove e near to the step h. This arrangement is described in Japanese Patent No. 932,781.

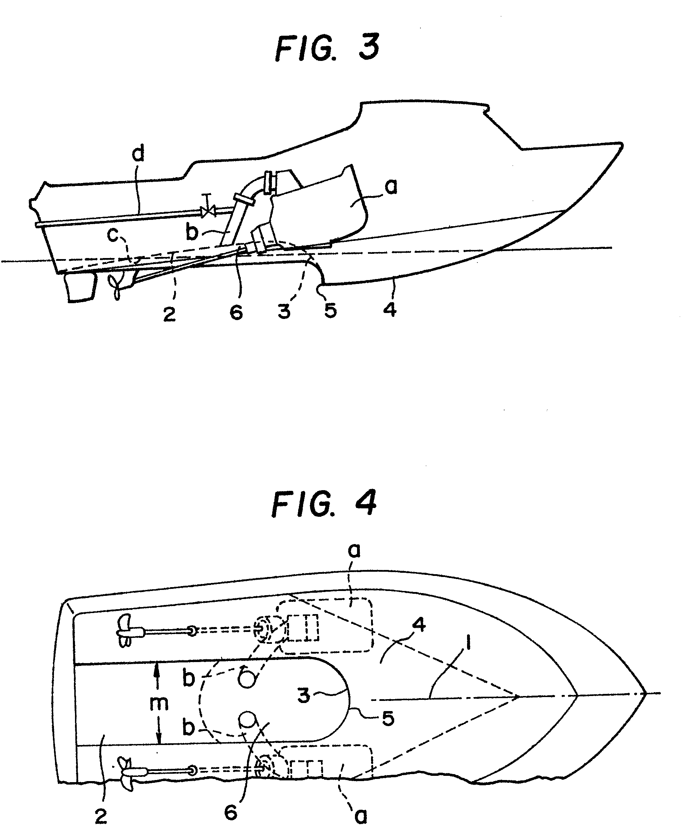

Figures 3 and 4 shows a known improvement of such a vessel. In this case main exhaust pipes b of a pair of engines a open into the water through

6.

a vessel's bottom c near to the stern. Auxiliary exhaust pipes d branch from the exhaust pipes b and are open to the atmosphere. A wall 3 terminates a recess 2 at the deepest part of the recess 2, which has a fixed width m along the keel line 1. The wall 3 forms a step 5 in the vessel's bottom 4. The main exhaust pipes b are both open to the recess 2 at a part 6 in the recess 2 which becomes filled with exhaust gas. This improvement is the subject of the publication in the Japanese Official Gazette, TOKKAI SHO-56-86891.

With a high speed vessel constructed in this way, frictional resistance is reduced by virtue of the lift generated at the part of the vessel's bottom which is not in contact with the water. Also, a vessel of relatively large width can be made by increasing the size of the surface providing lift. Resistance, leading to the formation of waves, is therefore reduced and the vessel is suitable for high speed navigation. However, when higher speeds are contemplated the overall centre of gravity of the vessel must be towards the stern and thus is achieved by positioning the main engine towards the stern rather than at the position shown in Figures 3 and 4. Therefore, the main exhaust pipe has to be led to the part 6 by the step 5 as shown in Figure 4. But this arrangement has the disadvantage that the vessel's weight increases with the installation of a long main exhaust pipe in the hull and also requires sophisticated construction techniques to mount the high temperature exhaust pipe in the hull. Therefore, in an embodiment of the present invention, the main exhaust pipe b opens directly to a recess 2 by the side of the engine. However, it is desired instantly to dissipate exhaust gases up to the part 6 which is near the step 5 of the recess 2.

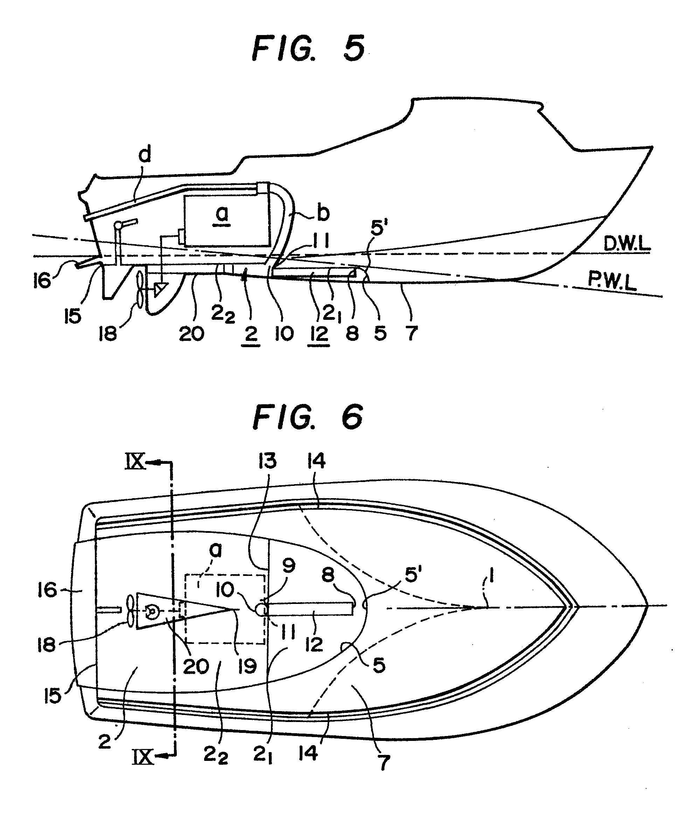

Figures 5 and 6 show an embodiment of the present invention, in which a main exhaust pipe b of an engine a is open to the water through the bottom of the vessel at an opening 10 near to the stem. A recess 2 is formed along the keel line 1, which gives rise to a step 5 of constant depth between the recess 2 and the rest of the vessel's bottom 7 so that exhaust gases fill the recess 2. A duct 12 is positioned such that one end 8 opens against a part 5' of the step 5, the part 5 being that part of the step 5 which is nearest to the bow. The other end 9 of the duct 12 at point 11 which is that part of the opening 10 of the main exhaust pipe b nearest the bow.

Because of this arrangement when the part 5' of the step 5 which is nearest to the bow first experiences reduced pressure, during the transition from low speed to high speed, exhaust gas is instantly sucked from the opening 10 of the main exhaust pipe b through the duct 12. The recess 2 is filled with exhaust gas in a short time, thereby generating lift and reducing frictional resistance.

8.

The present invention allows an increase in lift in a short time and enables frictional resistance to be reduced. This enables the provision of a high speed vessel of improved acceleration, and the vessel width can be made relatively large because of the increase in lift. Resistance leading to wave formation may be reduced. A vessel in accordance with the present invention may therefore find application as a high-speed pleasure boat.

It should be noted that when such a vessel is going astern, the pressure rise at the exhaust pipe is small because the opening 10 of the exhaust pipe b is at some distance away from the step part 5.

The recess 2 is formed with a second step 13 extending in a direction along the width of the recess 2. Thus the recess 2 is formed of a first portion $2_1$, which is relatively shallowly recessed, and a second portion $2_2$, which is relatively deeply recessed. The duct 12 extends in the first portion $2_1$ and the opening 10 of the main exhaust pipe b is at the forward edge of the second portion $2_2$.

Because of this arrangement of the exemplary embodiment, exhaust gas discharged from the opening 10 of the main exhaust pipe b rapidly disperses laterally, that is to say in the direction of the width of the recess 2. This reduces the area of the recess 2 in contact with the water and cuts down superficial water flow during acceleration from low speeds. Lift tends to increase in a shorter time during acceleration and greater acceleration may be achieved.

A first groove 14 is provided in a part 7 of the bottom around the recess 2. The first groove 14 serves to reduce or prevent exhaust gas leakage from the recess 2. A second groove 15 runs across the bottom at the stern. The second groove 15 also serves to reduce or prevent exhaust gas leakage from the recess 2. Figure 10(a) shows how the second groove may be provided as being formed in the bottom itself, and Figure 10(b) shows how the second groove 15 may be provided under a flap 16 a little above the bottom of a transom 17 at the stern of the vessel.

As the boat moves forward it thrusts water aside. Water brought in contact with the bottom surface of the boat is divided into two flow components, that is, a longitudinal component and a transverse component. The transverse flow component is inhibited by means of the first groove 14, so an area of increased pressure is developed along the first groove 14. As a result, any leakage of exhaust gas is effectively prevented. It should be noted that the transverse flow component is produced not only during acceleration but also during crusing at a constant speed.

Thus the first groove 14, which is installed near the chine of the vessel, serves to change dynamic pressure resulting from this flow into static pressure, which gives rise to a high pressure region along the chine and prevents the leakage of exhaust gas. Also, there is the second groove 15 formed at the stern aft of a surface past which water flows relatively as shown in Figure 10(a). Alternatively, there is also the second groove 15 formed by the flap 16 as shown in Figure 10(b).

Dynamic pressure resulting from flow in this region is similarly converted to static pressure thereby forming a high pressure region at the stern and preventing leakage of exhaust gas.

Because of this feature of the invention, an air-cushion effect can be obtained using the exhaust gas of the engine. This tends to be more economical than a hovercraft, which uses power to drive a lifting fan. Thus, the weight of the vessel can be reduced and the vessel can be operated using less power for a given speed and loading capacity, and generates less wave resistance when compared with a hovercraft, because of resemblance of the hull to a conventional high speed vessel. Further, the vessel is not equipped with a skirt as is required in the case of a hovercraft, thus resulting in the elimination of expense and time for skirt maintenance and repair, and has resistance characteristics at high speeds identical to those of a conventional stepped sliding boat, that is to say a planning boat with a transversely extending step formed across its bottom. A vessel in accordance with the present invention, however, does not need such a large engine as a stepped boat, because it does not have such a steeply increasing range of resistance under acceleration.

Figure 5 shows the Designed Water Line (DWL) of the boat (that is, the water line determined when designing the boat) and the Planing Water Line (PWL) (that is, the water line during planing motion.

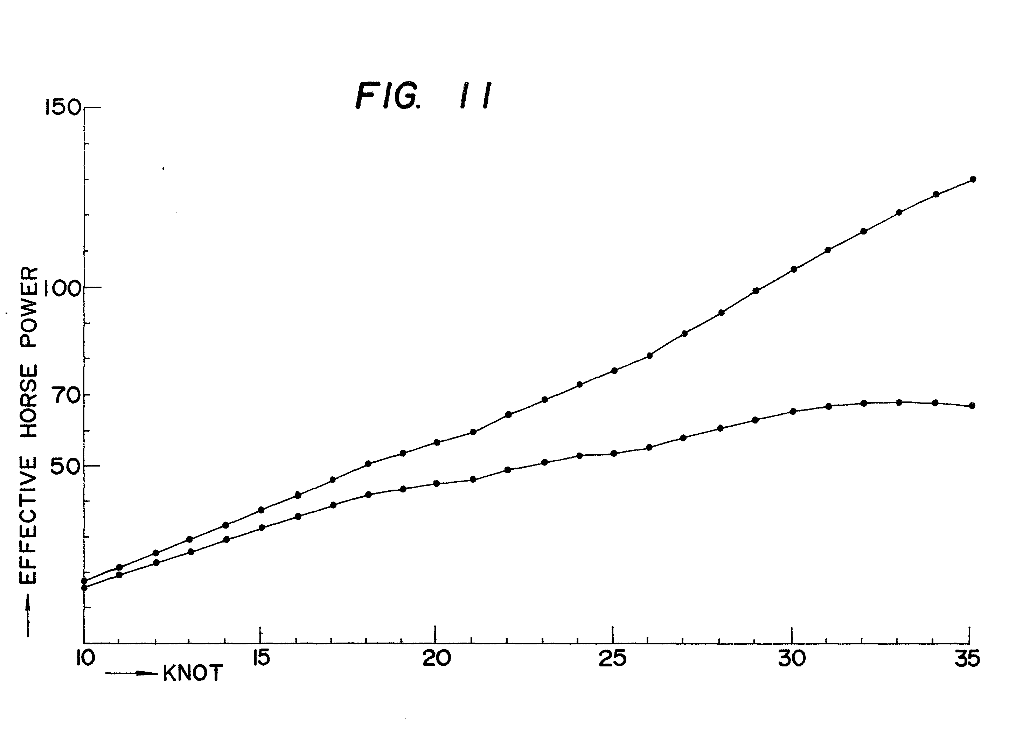

A vessel in accordance with the present invention is provided with a screw propeller 18, which is driven, by the engine, near the end of the recess 2. There is also provided a projecting sliding surface or water flow guide in the shape of an isosceles triangle 20 to the upstream side of the propeller 18 in the recess 2. The triangle 20 has a vertex 19 to the bow side, and a trapezium-shaped dove-tail section along a line parallel to the base of the isosceles triangle 20, as is shown in Figures 8 and 9.

11.

When water, foaming by virtue of the exhaust gas, flows towards the propeller 18, the triangle 20, which is located forward of the propeller 18, causes the water to be divided into two flow paths, and the foam 21 is forced to flow into a deep portion of the groove formed by the dove tail as shown in Figure 8. This avoids the problem of water containing a lot of foam flowing onto the propeller and reducing its efficiency.

It will be understood that filling the part 6, near the step 5, of the recess 2 with exhaust gas increases the lift and reduces the frictional resistance. The advantages of this arrangement may be reduced if water, foaming by virtue of air bubbles, flows onto the propeller. Hitherto, two propellers had to be used, as shown in Figure 4, if the flow of foaming water to the propellers was to be avoided. However, the present invention enables propulsion systems other than those consisting of twin propellers to be used.

The graph of Figure 11 shows how speed (along the x-axis) varies with effective horse power (along the y-axis) for a prior vessel (upper line) and a vessel in accordance with the present invention (lower line). Both vessels displace 30 tons (    tonnes) and have a length of 8 m at the water line and a breadth of 2.5 m at the water line. It can be seen that, to achieve a speed of 35 knots (18 m/s), the prior vessel must develop an effective power of 130 horse power (97 kw),

12.

whereas the vessel in accordance with the present invention need only develop an effective power of 70 horse power (51 kw).

The transport efficiency of a passenger vessel may be calculated by the following equation:

$$\text{Transport efficiency} = \frac{(\text{No. of passengers}) \times \text{Speed (Kt)}}{\text{Power (HP)}}$$

For a conventional passenger vessel, the transport efficiency was about 1.5 to 2.0; however, a vessel in accordance with this invention could develop 30.8 knots (16 m/s) with a load of 30 personnel with an engine developing 206 HP (154 kw). The transport efficiency was very high at about 4.49.

13.

CLAIMS

1. A vessel whose bottom comprises a recess (2) having an opening (1) through which exhaust gases can pass characterised in that there is provided a duct (12) in the recess leading forward from the opening (1).

2. A vessel according to Claim 1 wherein the duct does not protrude beyond the recess.

3. A vessel whose bottom comprises a recess (2) having an opening (10) through which exhaust gases can pass characterised in that the recess (2) comprises a relatively deeply recessed portion ($2_2$) and a relatively shallowly recessed portion ($2_1$) and in that the opening (10) is situated in the relatively deeply recessed portion, which is astern of the relatively shallowly recessed portion.

4. A vessel according to Claim 3, wherein the relatively deeply recessed portion is delimited from the relatively shallowly recessed portion by a step.

5. A vessel whose bottom comprises a recess (2) having an opening (10) through which exhaust gases can pass characterised in that a channel (14, 15) is provided around at least part of the recess.

6. A vessel according to Claim 5, wherein the channel is at least in part provided by a groove in the vessel's bottom.

0088640

14.

7.  A vessel according to Claim 5 or 6, wherein the channel is at least in part provided at the vessel's stern.

8.  A vessel whose bottom comprises a recess (2) having an opening (10) through which exhaust gases can pass, the vessel having a screw propeller (18), characterised in that a water flow guide (20) is positioned in the recess and at least partially forward of the propeller.

9.  A vessel according to Claim 8, wherein the water flow guide has a trapezium-like vertical section.

10.  A vessel according to Claim 8 or 9, wherein the water flow guide is in plan substantially in the form of an isosceles triangle with its tip forward of the propeller.

FIG. 1

FIG. 8

FIG. 2

FIG. 9

FIG. 10B  FIG. 10A

## FIG. 3

## FIG. 4

0088640

3/5

## FIG. 5

## FIG. 6

FIG. 7

# FIG. 11

EFFECTIVE HORSE POWER vs KNOT